## Europäisches Patentamt

## European Patent Office

## Office européen des brevets

(19)

(11) Veröffentlichungsnummer: **0 132 738**
**B1**

(12) # EUROPÄISCHE PATENTSCHRIFT

(45) Veröffentlichungstag der Patentschrift:
08.03.89

(51) Int. Cl.⁴: **B 60 G 5/04**

(21) Anmeldenummer: **84108315.7**

(22) Anmeldetag: **14.07.84**

(54) **Federvorrichtung für Dreiachsaggregate von Kraftfahrzeuganhängern.**

(30) Priorität: **30.07.83 DE 3327678**

(43) Veröffentlichungstag der Anmeldung:
**13.02.85 Patentblatt 85/7**

(45) Bekanntmachung des Hinweises auf die Patenterteilung:
**08.03.89 Patentblatt 89/10**

(84) Benannte Vertragsstaaten:
**DE FR GB IT NL**

(56) Entgegenhaltungen:
**EP-A-0 114 992**
**BE-A-727 302**
**FR-A-2 409 872**
**US-A-3 294 414**

(73) Patentinhaber: **Trenkamp & Gehle GmbH,
Märschendorfer Strasse, D-2843 Dinklage (Oldb.)
(DE)**

(72) Erfinder: **Gehle, Konrad, Heinrichstrasse 8, D-2843
Dinklage i.O. (DE)**

(74) Vertreter: **Busse & Busse Patentanwälte, Postfach
1226 Grosshandelsring 6, D-4500 Osnabrück (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 132 738 B1

## Beschreibung

Die Erfindung betrifft eine Federvorrichtung für Dreiachsaggregate von gezogenen oder aufgesattelten Kraftfahrzeuganhängern mit statischem und dynamischem Last- und Bremskräfteausgleich nach dem Oberbegriff des Patentanspruchs 1.

Bei bekannten Federvorrichtungen mit statischem und insbesondere dynamischem Achslastausgleich im Fahrbetrieb und beim Bremsen sind für die Federung der drei starren Radachsen eines jeden Dreiachsaggregats insgesamt sechs Blattfedern vorgesehen, von denen jeweils drei auf jeder Fahrzeugseite angeordnet sind. Auf jeder Fahrzeugseite ist dabei die Anordnung so getroffen, daß die jeweilige Blattfeder mittig über dem zugehörigen Achskörper liegt, mit dem sie ein Lager ausbildet. Bei einer bekannten Ausgestaltung bildet dieses Lager eine mittige, gleitbare Abstützung der Blattfeder auf ihrer zugehörigen Radachse. Eines der beiden Enden der Blattfedern ist dabei seinerseits gleitbar am Fahrgestellrahmen abgestützt, während das andere Federende fest am Fahrgestellrahmen abgestützt ist. Der Abstützung der Federenden dienen u.a. am Fahrgestellrahmen schwenkbar gelagerte Ausgleichswiegen, in denen jeweils einander zugewandte Federenden benachbarter Blattfedern gleitbar oder aber fest abgestützt sind. Stets ist dabei die Anordnung so getroffen, daß eines der Federenden der jeweiligen Blattfeder gleitbar bzw. längsbeweglich und das andere Federende fest gelagert ist.

Derartige Federvorrichtungen sind mit einem hohen Bauaufwand und hohen Gestehungskosten behaftet, die insbesondere durch die Blattfedern verursacht werden, die aus hochwertigem Federstehl bestehen und in der Regel von mehreren Federblättern im Schichtenaufbau gebildet sind. Wegen der Vielzahl der verwendeten Blattfederanordnungen und deren teils gleitender und teils fester Abstützung am Fahrgestellrahmen bzw. in an diesem angebrachten Ausgleichswiegen entstehen im Fahrbetrieb häufig Verlagerungen der Blattfedern, und die Radachsen führen beim Überfahren von Hindernissen und beim Bremsen nicht nur im wesentlichen aufwärts und abwärts gerichtete Bewegungen aus, sondern erfahren auch vorwärts und rückwärts gerichtete Verschiebungen, was insgesamt einem dynamischen Achslastausgleich im Fahrbetrieb sehr abträglich ist.

Es ist ferner eine Federvorrichtung für Dreiachsaggregate von gezogenen oder aufgesattelten Kraftfahrzeuganhängern mit statischem und dynamischem Last- und Bremskräfteausgleich bekannt (BE-A-727 302), wobei mittig auf der mittleren der drei starren Radachsen auf jeder Fahrzeugseite eine Blattfeder schwenkbar abgestützt ist, die ihrerseits an ihrem vorderen und ihrem hinteren Ende in je einer am Fahrgestellrahmen zwischen benachbarten Radachsen schwenkbar gelagerten Ausgleichswiege gleitbar abgestützt sind, und wobei ferner die Ausgleichswiegen mit ihren von den Blattfedern abgewandten Enden auf der vorderen Radachse bzw. der hinteren Radachse ihrerseits gleitbar abgestützt sind. Durch diese bekannte Ausgestaltung ist zwar erreicht, daß die Abfederung aller drei Radachsen durch nur zwei Blattfedern erfolgen kann, jedoch treten im Fahrbetrieb, insbesondere beim Bremsen, noch ungleichförmige Belastungen der einzelnen Radachsen auf, die das Fahrverhalten nachteilig beeinflussen.

Der Erfindung liegt die Aufgabe zugrunde, eine Federvorrichtung der eingangs angegebenen Art zu schaffen, die bei verringertem Bauaufwand einen höheren, verbesserten statischen und insbesondere dynamischen Achslast- bzw. Bremskräfteausgleich aufweist.

Diese Aufgabe wird nach der Erfindung durch eine Ausgestaltung der Vorrichtung gemäß dem Patentanspruch 1 gelöst. Bei dieser Ausgestaltung wird die Anzahl der für die Abfederung der drei Radachsen des Dreiachsaggregats benötigten Blattfedern auf ein Drittel der sonst üblichen Blattfederanzahl verringert, indem auf jeder Fahrzeugseite für das gesamte Dreiachsaggregat nur noch eine einzige Blattfeder vorgesehen ist, deren Federwirkung dank der Ausgleichswiegen und der an diesen vorgesehenen Verlängerungsarme gleichmäßig auf sämtliche Radachsen verteilt wird. Die um eine Querachse mittig auf der mittleren Radachse schwenkbare Anordnung der einzigen Blattfeder auf jeder Fahrzeugseite bewirkt in Verbindung mit der insgesamt gleitbaren Abstützung der Federanordnung beidseits der mittigen Schwenkachse sowie aufgrund der einenends schwenkbaren Abstützung am Fahrgestell und der anderenends starren Verbindung der Achslenker mit ihren Radachsen im Fahr- und Bremsbetrieb einen ausgezeichneten statischen und insbesondere einen hervorragenden dynamischen Achslastausgleich, indem die auftretenden Kräfte zu kontrollierten Aufwärts- und Abwärtsbewegungen der Radachsen und dabei zu einer gleichmäßigen Verteilung der Achslasten führen.

Weitere Merkmale und Vorteile der Erfindung ergeben sich aus den weiteren Ansprüchen und der nachstehenden Beschreibung in Verbindung mit der Zeichnung, in der ein Ausführungsbeispiel des Gegenstands der Erfindung schematisch veranschaulicht ist. In der Zeichnung zeigen:

Fig. 1   eine Federvorrichtung eines Dreiachsaggregats mit Blickrichtung auf die Stirnenden der Radachsen und

Fig. 2   eine Draufsicht auf die Federvorrichtung nach Fig. 1 entsprechend der linken Fahrzeugseite.

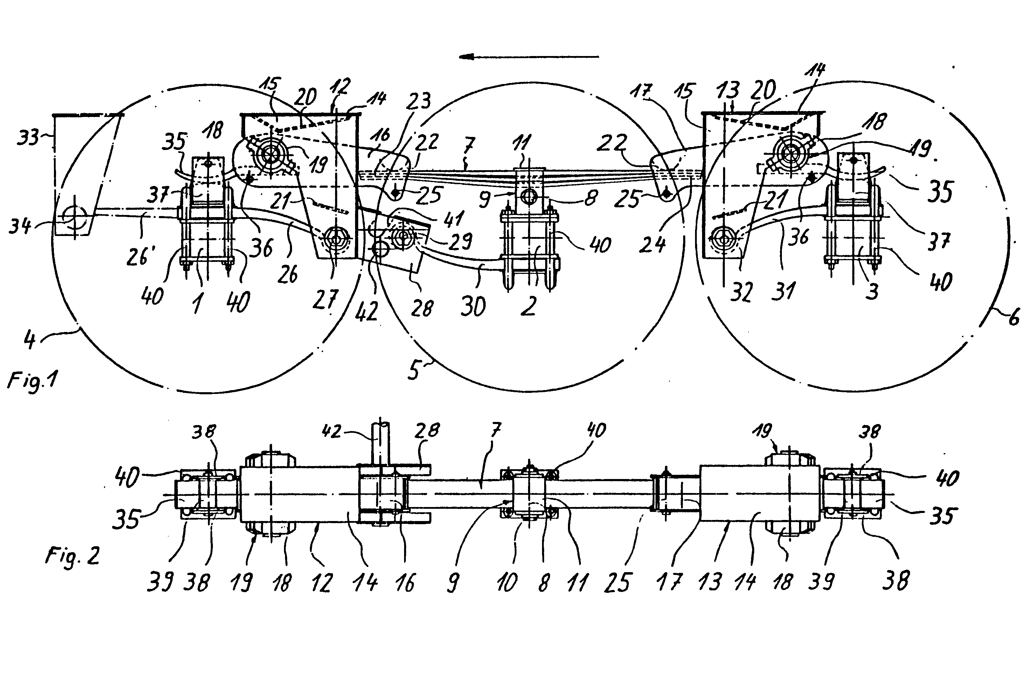

Die in Fig. 1 gewählte Darstellung der Federvorrichtung entspricht einer Seitenansicht eines Fahrzeugs bzw. Kraftfahrzeuganhängers, dessen normale Fahrtrichtung in Fig. 1 durch einen Richtungspfeil veranschaulicht ist. Das dargestellte, Dreiachsaggregat umfaßt demnach, in Fahrtrichtung gesehen, eine vordere Radachse 1, eine mittlere Radachse 2 und eine hintere Radachse 3. Der jeweils zugehörige Radkreis ist in Fig. 1 bei 4, 5 und 6 strichpunktiert angedeutet.

Die Federvorrichtung umfaßt nur eine Blatt- oder sog. Parabelfeder 7 auf jeder Fahrzeugseite. Die Blattfeder 7 umfaßt bei dem dargestellten Beispiel jeweils drei Federblätter. Die beiden Blattfedern 7 sind jeweils auf ihrer Fahrzeugseite mittig auf der mittleren Radachse 2 um eine Querachse 8 schwenkbar abgestützt. Hierzu ist in den beiden Endbereichen der mittleren Radachse 2 auf dieser jeweils ein Federlager 9 befestigt, das einen die Querachse 8 definierenden Lagerbolzen 10 umfaßt, um den die jeweilige Blattfeder 7 unter Zwischenschaltung einer Gummibuchse schwenkbar ist. Mittels eines eine obere Spannplatte und seitliche Führungswangen umfassenden Federgehäuses 11 ist dabei die jeweilige Blattfeder 7 mit einer Lagerhülse verspannt, die unter Zwischenschaltung der genannten Gummihülse den Lagerbolzen 10 umgibt und um diesen schwenkbar ist.

In Bereichen zwischen den Radachsen 1 und 2 bzw. 2 und 3 sind auf jeder Fahrzeugseite am Fahrgestellrahmen (nicht dargestellt) Konsolen 12 und 13 fest angebracht, z. B. angeschweißt, die eine obere Deckplatte 14 und Seitenwangen 15 umfassen. Die Konsolen 12 und 13 bilden auf diese Weise Lagerböcke für je eine Ausgleichswiege 16 bzw. 17, die in außenseitige Klemmschellen 18 umfassenden Lagern 19 schwenkbar an der Konsole 12 bzw. 13 abgestützt sind. Die Schwenkbarkeit der Ausgleichswiegen 15 und 16 ist dabei jeweils von oberen und unteren konsolenfesten Anschlägen 20 und 21 begrenzt.

An ihren der mittleren Radachse 2 zugewandten Enden sind die beiden Ausgleichswiegen 16 und 17 jeweils mit einem oberen, bei dem dargestellten Beispiel bogenförmigen Gleitstück 22 versehen, an dessen Unterseite sich die beiden, bei dem dargestellten Beispiel eben ausgebildeten Federenden 23 und 24 der jeweiligen Blattfeder 7 gleitbar bzw. längsbeweglich abstützen. Unterhalb der Gleitstücke 22 sowie ferner mit Abstand unterhalb der Federenden 23, 24 erstreckt sich jeweils ein Fangbolzen 25 durch die beiden Arme der in üblicher Weise zweiarmig ausgebildeten Ausgleichswiege 16 bzw. 17.

In den Seitenwangen der Konsole 12 ist auf jeder Fahrzeugseite zugleich ein starrer Achslenker 26 bei 27 schwenkbar abgestützt, der an seinem anderen Ende fest mit der Radachse 1 verbunden, z. B. mit dieser verschweißt ist. Die Seitenwangen 15 der Konsole 12 weisen zur mittleren Radachse 2 hin gerichtete Ansätze 28 auf, in denen bei 29 auf jeder Fahrzeugseite ein starrer Achslenker 30 schwenkbar gelagert ist, der an seinem anderen Ende mit der Radachse 2 fest verbunden, z. B. verschweißt ist. In den Seitenwangen 15 der Konsole 13 ist schließlich auf jeder Fahrzeugseite ein Achslenker 31 bei 32 schwenkbar abgestützt, der an seinem anderen Ende, entsprechend den Achslenkern 26 und 30, mit der Radachse 3 vereinigt ist. Zur Vermeidung horizontaler Hin- und Herbewegungen der Radachsen 1, 2 und 3 im Fahrbetrieb sind die Schwenkachsen 27, 29 und 32 der Achslenker 26, 30 und 31 im wesentlichen in einer horizontalen Ebene angeordnet, die die Achsmitten der Radachsen 1, 2 und 3 einschließt. Bei dem in Fig. 1 in vollen Linien dargestellten Ausführungsbeispiel werden die mittlere Radachse 2 und die hintere Radachse 3 von ihren zugehörigen Achslenkern 30 bzw. 31 gezogen, während die vordere Radachse 1 von den zugehörigen Achslenkern 26 geschoben wird. Eine Abwandlung in der Weise, daß auch die vordere Radachse 1 von ihren zugehörigen Achslenkern gezogen wird, ist in Fig. 1 strichpunktiert veranschaulicht. Hiernach ist der Achslenker 26' auf jeder Fahrzeugseite an seinem einen Ende wiederum fest mit der Radachse 1 verbunden, während sein von der Radachse 1 abgewandtes Ende in einer zusätzlichen am Fahrgestellrahmen befestigten Konsole 33 bei 34 schwenkbar gelagert ist. Die Seitenwangen 15 der Konsole 12 können bei dieser Abwandlung verkürzt werden und beispielsweise etwas unterhalb des unteren Anschlags 21 enden.

An ihren von der mittleren Radachse 2 abgewandten Enden weisen die Ausgleichswiegen 16 und 17 jeweils einen Verlängerungsarm 35 auf, der von einem Federblatt od.dgl. gesonderten Bauteil gebildet sein kann, das mit der Ausgleichswiege 16 bzw. 17 mittels einer eine untere Klemmschraube 36 umfassenden Spannvorrichtung fest mit der Ausgleichswiege verspannt ist. Es ist jedoch genauso gut möglich, den Verlängerungsarm 35 einteilig mit der Ausgleichswiege 16 bzw. 17 auszubilden.

Die Verlängerungsarme 35 sind an ihren freien Enden leicht aufwärts gekrümmt und mit ihrer unteren konvexen Seite auf in der mittleren Vertikalebene der Radachse 1 bzw. 3 angeordneten Auflagen in Form von Gleitschuhen 37 mit ebener Oberseite abgestützt. Die Gleitschuhe 37 umfassen dabei seitliche Wangen 38, in deren oberem Endbereich eine mit einem elastischen Überzug versehene Fangrolle 39 für die Verlängerungsarme 35 frei drehbar gelagert ist. Zwischen der Fangrolle 39 und der Oberseite des Verlängerungsarms 35 ist Spiel belassen, um die Gleitbarkeit des Verlängerungsarms 35 in Fahrzeuglängsrichtung nicht zu beeinträchtigen, andererseits werden jedoch durch die Fangrollen 39 übermäßige Bewegungen der Verlängerungsarme 35 aufgefangen. Im übrigen sind die Gleitschuhe 37 jeweils mit Hilfe von Spannbügeln 40 mit ihrer zugehörigen Radachse 1 bzw. 3 fest verbunden; mittels solcher Spannbügel 40 ist darüber hinaus auch das Federlager 9 mit der mittleren Radachse 2 fest verspannt. Zur Gewährleistung des erforderlichen Schwenkwinkels der Ausgleichswiege 16 nach unten sind die Ansätze 28 an ihrer Oberseite mit einer Aussparung 41 zur Aufnahme der unteren Nase der Ausgleichswiege 16 versehen, wobei sich ferner durch die Ansätze 28 eine rohrförmige Traverse 42 erstreckt.

Die beschriebene Anordnung vermeidet im Betrieb nennenswerte Hin- und Herbewegungen der Radachsen 1, 2 und 3; in Verbindung mit den in der beschriebenen Weise schwenkbar angelenkten Achslenkern 26, 30 und 31 findet vielmehr unter Lastbeanspruchung im wesentlichen nur eine aufwärts- und abwärtsgerichtete Bewegung der Radachsen 1, 2 und 3, praktisch auf einem Kreisbogen sehr geringer Krümmung statt.

## Patentansprüche

1. Federvorrichtung für Dreiachsaggregate von gezogenen oder aufgesattelten Kraftfahrzeuganhängern mit statischem und dynamischem Last- und Bremskräfteausgleich, wobei mittig auf der mittleren (2) der drei starren Radachsen (1, 2, 3) auf jeder Fahrzeugseite eine Blattfeder (7) schwenkbar abgestützt ist, die ihrerseits an ihrem vorderen und ihrem hinteren Ende (23, 24) in je einer am Fahrgestellrahmen zwischen benachbarten Radachsen schwenkbar gelagerten Ausgleichswiege (16, 17) gleitbar abgestützt sind, und wobei ferner die Ausgleichswiegen (16,17) mit ihren von den Blattfedern (7) abgewandten Enden auf der vorderen Radachse (1) bzw. der hinteren Radachse (3) ihrerseits gleitbar abgestützt sind, dadurch gekennzeichnet, daß die Ausgleichswiegen (16, 17) in fahrgestellfesten Konsolen (12, 13) schwenkbar gelagert sind und in den Konsolen (12, 13; 33, 12, 13) zugleich starre Achslenker (26, 30, 31; 26', 30, 31) einenends schwenkbar abgestützt sind, die anderenends fest mit ihrer zugehörigen Radachse (1, 2, 3) verbunden sind.

2. Vorrichtung nach Anspruch 1, dadurch gekennzeichnet, daß die in Bereichen zwischen der vorderen und der mittleren Radachse (1, 2) am Fahrgestellrahmen angeordneten Konsolen (12) die Achslenker (26, 30) der vorderen und der mittleren Radachse aufnehmen, während die Achslenker (31) der hinteren Radachse (3) von den in Bereichen zwischen dieser und der mittleren Radachse am Fahrgestellrahmen angeordneten Konsolen (13) aufgenommen sind.

3. Vorrichtung nach Anspruch 1, dadurch gekennzeichnet, daß in den in Bereichen zwischen den Radachsen (1, 2, 3) am Fahrgestellrahmen angeordneten Konsolen (12, 13) die Achslenker (30, 31) der mittleren und der hinteren Radachse (2, 3) abgestützt sind und die Achslenker (26') der vorderen Radachse (1) in gesonderten Konsolen (33) abgestützt sind, von denen jeweils eine auf jeder Fahrzeugseite mit Abstand in Fahrzeuglängsrichtung vor der vorderen Radachse am Fahrgestellrahmen befestigt ist.

4. Vorrichtung nach einem der Ansprüche 1 bis 3, dadurch gekennzeichnet, daß die Ausgleichswiegen (16, 17) jeweils einen Verlängerungsarm (35) aufweisen, die jeweils in in der mittleren Vertikalebene der vorderen und der hinteren Radachse (1, 3) angeordneten Auflagen gleitbar abgestützt sind.

5. Vorrichtung nach Anspruch 4, dadurch gekennzeichnet, daß die Auflagen der vorderen und der hinteren Radachse (1, 3) von auf deren Oberseite angebrachten Gebitschuhen (37) gebildet sind, denen jeweils eine obere Fangrolle (39) zugeordnet ist.

6. Vorrichtung nach Anspruch 4 oder 5, dadurch gekennzeichnet, daß die Verlängerungsarme (35) der Ausgleichswiegen (16, 17) von in diesen fest eingespannten Federblättern o. dgl. Gleitarmen gebildet sind.

7. Vorrichtung nach einem der Ansprüche 1 bis 6, dadurch gekennzeichnet, daß die Schwenkbarkeit der Ausgleichswiegen (16, 17) von oberen und unteren konsolenfesten Anschlägen (20, 21) begrenzt ist.

8. Vorrichtung nach einem der Ansprüche 1 bis 7, dadurch gekennzeichnet, daß die beiden Federenden (23, 24) der beiden Blattfedern (7) jeweils an einem oberen Gleitstück (22) der Ausgleichswiegen (16, 17) an dessen Unterseite abgestützt sind.

## Claims

1. A suspension device for six-wheel units of motor-vehicle trailers or semi-trailers, with static and dynamic load and brake-force equalization, wherein a leaf spring (7) is pivotally supported centrally on the middle one (2) of the three rigid axles (1, 2, 3) at each side of the vehicle, which springs are, for their part, each supported, at their front and at their rear end (23, 24) for sliding in an equalizing cradle (16, 17) pivotally mounted on the chassis frame between adjacent axles, and wherein further, the equalizing cradles (16, 17) are, for their part, supported by their ends remote from the leaf springs (7) for sliding on the front axle (1) or on the rear axle (3) respectively, characterized in that the equalizing cradles (16, 17) are pivotally mounted in brackets (12, 13) fixed to the chassis and, at the same time, rigid axles guide rods (26, 30, 31; 26', 30, 31) are pivotally supported in the brackets (12, 13; 33, 12, 13) at one end and are rigidly connected to their associated axle (1, 2, 3) at the other end.

2. A device according to claim 1, characterized in that the brackets (12), which are mounted on the chassis frame in regions between the front and the middle axle (1, 2) receive the axle guide rods (26, 30) of the front and the middle axle, while the axle guide rods (31) of the rear axle (3) are received by the brackets (13) mounted on the chassis frame in regions between this axle and the middle axle.

3. A device according to claim 1, characterized in that the axle guide rods (30, 31) of the middle and of the rear axle (2, 3) are supported in the brackets (12, 13) mounted on the chassis frame in regions between the axles (1, 2, 3) and the axle guide rods (26') of the front axle (1) are supported in separate brackets (33) one of which is secured to the chassis frame at each side of the vehicle with spacing in the longitudinal direction of the vehicle in front of the front axle.

4. A device according to any one of claims 1 to 3, characterized in that the equalizing cradles (16, 17) each comprise an extension arm (35), each of which is supported for sliding in a support disposed in the central vertical plane of the front and of the rear axle (1, 3).

5. A device according to claim 4, characterized in that the supports of the front and of the rear axles (1, 3) are formed by sliding blocks (37) fitted at their upper side and with each of which there is associated an upper captivating roller (39).

6. A device according to claim 4 or 5, characterized in that the extension arms (35) of the equalizing cradles (16, 17) are formed by leaf springs or the like sliding arms fixed in the latter.

7. A device according to any one of claims 1 to 6, characterized in that the pivotability of the equalizing cradles (16, 17) is limited by upper and lower stops (20, 21) fixed to the brackets.

8. A device according to any one of claims 1 to 7, characterized in that the two ends (23, 24) of the two leaf springs (7) are each supported on an upper slider (22) of the equalizing cradle (16, 17), at the under side thereof.

**Revendications**

1. Dispositif de suspension pour ensembles de trois essieux de remorque tirée ou accrochée de véhicule à moteur, avec compensation statique et dynamique de charge et de force de freinage, pour lequel, en son centre, sur l'essieu central (2) des trois essieux rigides (1, 2, 3) de roues, un ressort (7) à lames de chaque côté du véhicule est soutenu de façon articulée, lequel, à son tour, est soutenu, pour chacune de ses extrémités avant et arrière (23, 24), dans un berceau (16, 17) de compensation disposé de façon articulée entre les essieux de roues voisins dans le cadre du châssis, et de manière qu'il puisse glisser, et pour lequel, de plus, les berceaux (16, 17) de compensation sont soutenus à leur tour avec leurs extrémités opposées aux ressorts (7) à lames par l'essieu avant (1) de roues ou l'essieu arrière (3) de roues respectivement, et de façon qu'ils puissent glisser, caractérisé en ce que les berceaux (16, 17) de compensation sont disposés de façon articulée dans des consoles (12, 13) fixées au châssis, et que dans les consoles (12, 13 ; 33, 12, 13), des guides rigides (26, 30, 31 ; 26', 30, 31) d'essieux s'appuient en même temps de façon articulée à l'une de leurs extrémités, l'autre de leurs extrémités étant reliée de façon fixe à l'essieu correspondant (1, 2, 3) de roues.

2. Dispositif selon la revendication 1, caractérisé en ce que les consoles (12), disposées sur le cadre du châssis dans les zones entre l'essieu avant (1) et l'essieu central (2) de roues, reçoivent les guides (26, 30) d'essieux avant et central, tandis que les guides (31) d'essieu de l'essieu arrière (3) sont reçus par les consoles (13) disposées sur le cadre du châssis dans les zones entre cet essieu arrière et l'essieu central.

3. Dispositif selon la revendication 1, caractérisé en ce que, dans les consoles (12, 13) disposées sur le cadre du châssis dans les zones entre les essieux (1, 2, 3) de roues, s'appuient les guides (30, 31) d'essieux des essieux centraux (2) et arrière (3), et que les guides (26') d'essieu de l'essieu avant (1) s'appuient sur des consoles séparées (33), lesquelles, de chaque côté du véhicule, sont fixées sur le cadre du châssis à une certaine distance devant l'essieu avant, dans le sens longitudinal du véhicule.

4. Dispositif selon l'une des revendications 1 à 3, caractérisé en ce que les berceaux (16, 17) de compensation présentent chacun un bras (35) de prolongement, chacun s'appuyant, de façon à pouvoir glisser, sur des revêtements disposés dans les plans verticaux centraux des essieux avant (1) et arrière (3) de roues.

5. Dispositif selon la revendication 4, caractérisé en ce que les revêtements des essieux avant (1) et arrière (3) sont formés sur leur côté supérieur de patins (37) de glissement, un rouleau (39) de serrage étant associé à chacun d'eux.

6. Dispositif selon la revendication 4 ou 5, caractérisé en ce que les bras (35) de prolongement des berceaux (16, 17) de compensation sont formés de lames de ressort ou de bras analogues de glissement mis sous contrainte de façon fixe dans ces berceaux.

7. Dispositif selon l'une des revendications 1 à 6, caractérisé en ce que l'articulation des berceaux (16, 17) de compensation est limitée par des butées supérieures (20) et inférieures (21) fixées aux consoles.

8. Dispositif selon l'une des revendications 1 à 7, caractérisé en ce que les deux extrémités (23, 24) des deux ressorts (7) à lames s'appuient chacune sur le côté inférieur d'une pièce supérieure (22) de glissement des berceaux (16, 17) de compensation.

Fig. 1

Fig. 2